# EUROPÄISCHE PATENTANMELDUNG

(11) **EP 2 082 873 A2**
(43) Veröffentlichungstag der Anmeldung: **29.07.2009**
(21) Anmeldenummer: 09000824.4
(22) Anmeldetag: 22.01.2009
(51) Int. Cl.: B32B 38/18, B32B 37/10

(54) **Distanzelement fuer plattenfoermige Elemente**

(30) Priorität: 23.01.2008 AT 902008
(71) Anmelder: 3S Swiss Solar Systems AG, 3250 Lyss (CH)
(72) Erfinder: Zahnd, Jürg, 3427 Utzenstorf (CH); Chimenti, Alessandro, 3072 Ostermundigen (CH); Polo, Roman, 3013 Bern (CH); Knaack, Ruben, 4054 Basel (CH); Strebel, Beat, 4118 Rodersdorf (CH)
(74) Vertreter: Secklehner, Günter

(57) **Zusammenfassung**

Die Erfindung beschreibt ein Distanzelement (33) zur bedarfsweisen Distanzierung von plattenförmigen Elementen (4) von einem Temperierelement (25), mit einem Tragelement (35), welches einen dem plattenförmigen Element (4) zuwendbaren ersten Endbereich (36) aufweist. Im Abschnitt des ersten Endbereiches (36) ist ein biegeelastisch ausgebildetes Stützelement (37) angeordnet, welches das Tragelement (35) überragt. Weiters umfasst die Erfindung auch noch eine Maschine (1) mit einem Distanzelement (33).

## Beschreibung

Die Erfindung betrifft ein Distanzelement zur bedarfsweisen Distanzierung von plattenförmigen Elementen, wie photovoltaischen Elementen, von einem Temperierelement, wie einer Heizplatte oder Kühlplatte, mit einem Tragelement, welches einen dem plattenförmigen Element zuwendbaren ersten Endbereich aufweist. Ferner betrifft die Erfindung eine Maschine zur Herstellung von plattenförmigen Elementen.

Bei der Produktion von plattenförmigen Elementen aus Verbundmaterial, beispielsweise photovoltaischen Elementen, werden mehrere Schichten, darunter Glas, unter Druck und Wärme zusammengefügt. Die für diesen Vorgang verwendeten Maschinen haben im Allgemeinen eine beheizbare Laminierstation, eine Kühlstation und Transportmittel zum intermittierenden Fördern der Elemente. Die Laminierstation weist dabei eine Heizplatte auf und an einem auf die Heizplatte absenkbaren Oberteil ist eine Membrane vorhanden, die im abgesenkten Zustand mit der Heizplatte eine geschlossene Kammer bildet. Durch Evakuieren dieser Kammer werden die Elemente entgast und die Membrane wird durch den auf der von der Kammer abgewandten Seite der Membrane wirkenden Druck an die Heizplatte und die Elemente angedrückt und presst die Elemente zusammen.

Aus der US 6,149,757 A ist eine Laminiervorrichtung zum Verbinden von plattenförmigen Elementen bekannt geworden, bei der die Laminiervorrichtung zumindest einen Laminierabschnitt ausbildet. Jeder dieser Laminierabschnitte umfasst seinerseits wiederum eine obere und eine untere Kammer, wobei die beiden Kammern durch eine Membrane voneinander getrennt sind. Die Laminiereinrichtung umfasst weiters eine Heizplatte zum Aufheizen des zu laminierenden Materials. Letztere ist von stiftförmigen Stützelementen durchragt, die je nach Stellung des Heizelements oder der Stützelemente eine Distanzierung des zu laminierenden Materials von der Heizplatte bewirken. Das zu laminierende Material wird über eigene Hub- bzw. Fördermittel in die Laminierkammer verbracht und auf den Stützelementen abgelegt.

Die Stützelemente erlauben es, die plattenförmigen Elemente nach dem Einrühren auf die Heizplatte während der ersten Phase des Aufheizens in einem definierten Abstand von der Heizplatte zu halten, um die Aufheizung nur durch Strahlung geschehen zu lassen. Dies erlaubt ein gleichmäßigeres, langsameres Aufheizen, als wenn die Elemente direkt in Kontakt mit der Heizplatte wären, und kommt einem Verbiegen der Elemente zuvor, welches durch einen ungleichmäßigen Kontakt mit der Heizplatte auftreten würde. Sobald die Elemente eine ausreichende Temperatur erreicht haben, um sich beim direkten Kontakt mit der Heizplatte nicht mehr zu verbiegen, können sie dann zum schnelleren weiteren Aufheizen auf dieselbe abgesenkt werden.

Bei Laminiermaschinen, bei denen die zu laminierenden Elemente durch Schiebevorrichtungen oder ein Transportband auf die Heizplatte und nach dem Laminieren von dieser weg gefördert werden, müssen die Stützelemente zum Ein- und Ausfahren der plattenförmigen Elemente in der Heizplatte versenkt werden. Ein Einfördern auf die ausgefahrenen stiftförmigen Distanzelemente könnte die plattenförmigen Elemente und/oder das zwischenliegende Transportband beschädigen. Das Einfördern bei eingefahrenen Distanzelementen hat jedoch den Nachteil, dass die plattenförmigen Elemente bereits während des Einfahrens in Kontakt mit der Heizplatte sind, und zusätzlich die in Transportrichtung weiter vorne liegenden Bereiche der plattenförmigen Elemente länger in direktem Kontakt mit der Heizplatte sind als die weiter hinten liegenden Bereiche. Dadurch werden die Vorteile des langsamen und gleichmäßigen Aufwärmens der plattenförmigen Elemente gemindert.

Die Situation bei der Kühleinrichtung präsentiert sich ähnlich, aber mit umgekehrten Vorzeichen bei der Temperaturänderung der plattenförmigen Elemente. Auch hier ist es von Vorteil, möglichst schonend mit dem Kühlen zu beginnen und dabei insbesondere dafür zu sorgen, dass die Temperaturdifferenzen zwischen den einzelnen Schichten möglichst gering gehalten werden. Ansonsten besteht bei einigen Verbundfolien die Gefahr, dass zum Zeitpunkt ihrer Erstarrung während des Kühlprozesses Schichten zu einem Zeitpunkt fest miteinander verbunden werden, in dem sie sich wegen großer Temperaturdifferenzen in unterschiedlicher thermischer Längenausdehnung befinden. Dies kann dann im erkalteten Zustand zu erheblichen Spannungen in den plattenförmigen Elementen aus Verbundmaterial führen.

Der Erfindung liegt die Aufgabe zu Grunde, ein Distanzelement sowie eine mit einem derartigen Distanzelement ausgerüstete Maschine zu schaffen, durch welche die geschilderten Nachteile behoben werden und die es insbesondere erlauben, die zu erwärmenden oder zu kühlenden Elemente bereits beim Transport auf das Temperierelement in einem vertikalen Abstand von diesem zu halten, ohne dass dabei die Gefahr besteht, dass die Elemente und/oder ein gegebenenfalls verwendetes Transportband durch die Distanzelemente übermäßig beansprucht werden.

Diese Aufgabe der Erfindung wird dadurch gelöst, dass im Abschnitt des ersten Endbereiches ein biegeelastisch ausgebildetes Stützelement angeordnet ist, welches das Tragelement überragt.

Der sich durch die Merkmale des Kennzeichenteiles des Anspruches 1 ergebende überraschende Vorteil liegt darin, dass durch das biegeelastisch ausgebildete Stützelement ein bezüglich des Tragelements elastisch verformbares Zwischenglied geschaffen wird, welches das plattenförmige Element gegebenenfalls unter Zwischenschaltung des Transportbandes abstützt. Durch dieses zusätzliche Stützelement wird die Abstützfläche variabel und elastisch gestaltet und so eine punkt- bzw. linienförmige Auflage vermieden. Weiters wird durch die biegeelastische Ausbildung des Stützelements eine Transportbewegung auch bei abgehobener Stellung der plattenförmigen Elemente vom Temperierelement ermöglicht, da durch die Zwischenschaltung des Stützelements eine als schwimmend bezeichnete Auflage für das plattenförmige Element geschaffen wird und so Ungenauigkeiten in der höhenmäßigen Anordnung der Distanzelemente ausgeglichen werden können. Weiters wird durch die biegeelastische Ausbildung des Stützelements eine automatische Rückstellung auch über einen langen Zeitraum desselben bewirkt, wodurch eine sichere Betriebsdauer erzielbar ist. Dadurch wird eine nicht starre Auflageebene geschaffen, welche in gewissen Toleranzen eine sichere Abstützung bei gleichzeitigem Transport auf dem Stützelement ermöglicht.

Vorteilhaft ist auch eine weitere Ausführungsform nach Anspruch 2, da dadurch die Lastabtragung auf eine größere Fläche verteilt werden kann und dadurch eine bessere Abstützwirkung bei zusätzlichem Höhenausgleich erzielbar ist.

Vorteilhaft ist weiters eine Ausbildung nach Anspruch 3, da so auf geringstem Raum eine bestmögliche Abstützwirkung im elastischen Bereich erzielbar ist. Zusätzlich kann durch die Anzahl und Auswahl der einzelnen Fäden bzw. Litzen das Rückfederverhalten sowie die Gleiteigenschaften auf unterschiedlichste Anwendungsfälle angepasst werden.

Durch die Ausbildung nach Anspruch 4 ist es möglich, ohne zusätzliche Haltemittel das Auslangen zu finden und trotzdem eine stabile Ausrichtung und Halterung des Stützelements am Tragelement zu erzielen. Weiters kann dadurch eine vorbestimmte Lageausrichtung des Stützelements bezüglich des Tragelements erreicht werden.

Nach einer anderen Ausführungsvariante gemäß Anspruch 5 wird ein kontinuierlicher scharfkantiger Übergang vermieden, wodurch die Einsatzdauer des Stützelements auch bei starken Verformungen bezüglich des Tragelements erhöht werden kann.

Vorteilhaft ist auch eine Weiterbildung nach Anspruch 6, da so einfach auf unterschiedlichste Einsatzbedingungen Rücksicht genommen werden kann und bedarfsweise eine rasche Umrüstung der gesamten Anlage bzw. Maschine möglich ist.

Bei der Ausgestaltung nach Anspruch 7 ist von Vorteil, dass so bei geringstem Platzbedarf eine sichere Abstützung des plattenförmigen Elements an dem oder den Distanzelementen ermöglicht wird und dabei die für den Temperiervorgang notwendige Temperierfläche nahezu vollständig erhalten bleibt.

Die Aufgabe der Erfindung wird aber eigenständig auch durch die Ausgestaltung der Maschine zur Herstellung von plattenförmigen Elementen durch die im Anspruch 8 angegebenen Merkmale gelöst. Vorteilhaft ist dabei, dass durch die biegeelastisch ausgebildeten Stützelemente ein bezüglich des Tragelements elastisch verformbares Zwischenglied geschaffen wird, welches das plattenförmige Element abstützt. Durch diese zusätzlichen Stützelemente wird die Abstützfläche variabel und elastisch gestaltet und so eine punkt- bzw. linienförmige Auflage vermieden. Weiters wird durch die biegeelastische Ausbildung der Stützelemente eine Transportbewegung auch bei abgehobener Stellung der plattenförmigen Elemente vom Temperierelement ermöglicht, da durch die Zwischenschaltung der Stützelemente eine als schwimmend bezeichnete Auflage für die plattenförmigen Elemente geschaffen wird und so Ungenauigkeiten in der höhenmäßigen Anordnung der Distanzelemente ausgeglichen werden können. Weiters wird durch die biegeelastische Ausbildung der Stützelemente eine automatische Rückstellung über auch über einen langen Zeitraum derselben bewirkt, wodurch eine sichere Betriebsdauer erzielbar ist. Dadurch wird eine nicht starre Auflageebene geschaffen, welche in gewissen Toleranzen eine sichere Abstützung bei gleichzeitigem Transport auf den Stützelementen ermöglicht.

Durch die Ausbildung nach Anspruch 9 kann sowohl während des Transportvorganges als auch während des eigentlichen Laminiervorgangs die Temperierung der zu fördernden plattenförmigen Elemente gesteuert werden. Dadurch wird der Aufbau von inneren Spannungen durch ungleiche Temperierung vermieden, wodurch die Lebensdauer bzw. Standzeit der plattenförmigen Elemente wesentlich erhöht und darüber hinaus auch Ausschuss vermieden werden kann.

Gemäß einer Ausbildung, wie im Anspruch 10 beschrieben, wird das Ein- und Ausfördern der plattenförmigen Elemente erleichtert und kann auf Wunsch automatisiert werden.

Dabei erweist sich eine Ausgestaltung nach Anspruch 11 vorteilhaft, da so ohne zusätzlichem hohen Aufwand eine gesicherte Vorschubbewegung auf den Distanzelementen erfolgen kann. Zudem kann durch das Band auch über längere Zeitdauer ein Verschmutzen des Temperierelements während des Laminiervorgangs vermieden und so über eine längere Zeitdauer ein störungsfreier Betrieb bei geringstem Reinigungsaufwand gewährleistet werden.

Die Erfindung betrifft auch ein Verfahren zum Betrieb einer Maschine, bei welchem die Distanzelemente in ihre erste Position gebracht werden, bevor die Fördermittel in Betrieb gesetzt werden, um plattenförmige Elemente über das Temperierelement zu bringen. Dabei ist besonders vorteilhaft, dass die plattenförmigen Elemente erst dann auf das Temperierelement abgesenkt werden, wenn sie sich vollständig über diesem befinden und ein ungleichmäßiges Erwärmen oder Abkühlen der Elemente vermieden wird.

Zum besseren Verständnis der Erfindung wird diese anhand der nachfolgenden Figuren näher erläutert.

### Es zeigen jeweils in stark schematisch vereinfachter Darstellung:

- Fig. 1: einen Längsschnitt durch eine erfindungsgemäße Maschine zur Herstellung von plattenförmigen Elementen, bei aufliegender Stellung der Elemente an den Temperierelementen und abgehobenen Oberteilen;
- Fig. 2: einen Teilbereich der Maschine nach Fig. 1, jedoch in einer distanzierten Stellung des plattenförmigen Elements vom Temperierelement, in vergrößerter und vereinfachter Darstellung;
- Fig. 3: eine mögliche Ausbildung eines Distanzelements, in Ansicht geschnitten und vergrößerter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

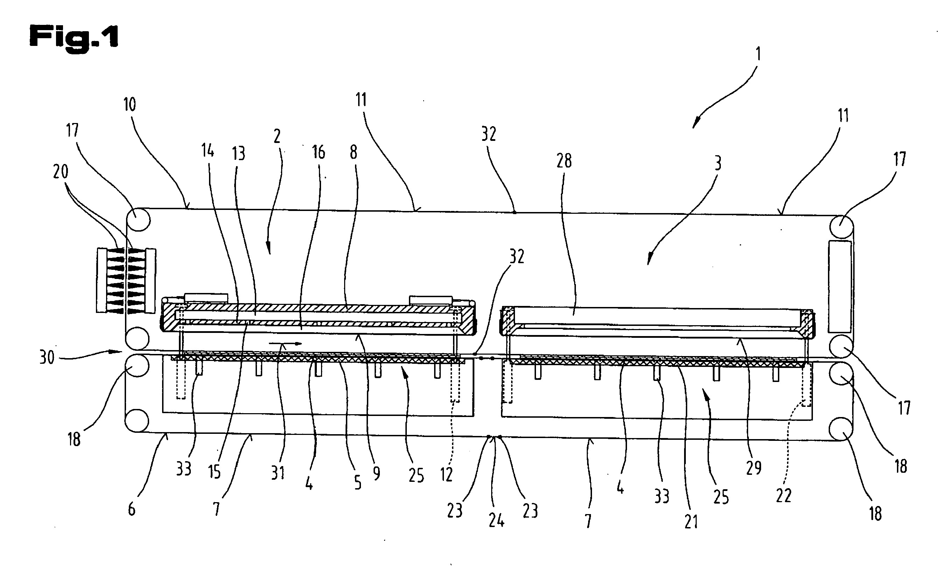

Die Fig. 1 zeigt eine stark vereinfachte, schematische Schnittansicht durch die Längsachse einer Maschine 1 zum Fügen bzw. zur Herstellung von plattenförmigen Elementen aus Verbundmaterial. Dabei kann die Maschine 1 in einem Gestell montiert sein, das aber der besseren Übersicht halber hier nicht dargestellt ist.

In der Maschine 1 werden plattenförmige Elemente 4, etwa photovoltaische Elemente, durch ein Fördermittel 6 in eine Laminierstation 2 transportiert, wo die Elemente 4 unter Einwirkung von Druck und Hitze laminiert werden. Anschließend werden die Elemente 4 durch die Fördermittel 6 in Richtung eines Pfeils 31, der die Förderrichtung darstellt, in eine Kühlstation 3 transportiert, wo sie eine gewisse Zeit unter Druck verweilen.

Die Laminierstation 2 besteht im Wesentlichen aus einer Heizplatte 5 und einem senkrecht zu dieser bewegbaren Oberteil 8. Mit der Bezugszahl 12 sind Hubantriebe bezeichnet, mit denen der Oberteil 8 relativ zur Heizplatte 5 absenkbar und anhebbar ist. Der Oberteil 8 trägt an seiner Unterseite eine Membrane 9, die im abgesenkten Zustand des Oberteils 8 mit der Heizplatte 5 eine abgeschlossene Kammer bildet, welche evakuiert werden kann. Bei evakuierter Kammer werden die zu laminierenden Elemente 4 durch die Membrane 9 gegen die Heizplatte 5 gepresst. Mögliche Lufteinschlüsse, die gegebenenfalls zwischen den Schichten bzw. Lagen der Elemente 4 noch vorhanden sind, werden abgesaugt und somit entfernt. Weiters wird der zwischen den Schichten der Elemente 4 vorhandene Klebstoff durch den Druck und die Hitze aktiviert.

Zwischen der Membrane 9 und einer Zwischenwand 14 ist im Oberteil 8 eine Kammer 16 gebildet, die bedarfsweise mit Unterdruck oder Überdruck beaufschlagbar ist, um die Membrane 9 entweder zur Zwischenwand 14 hin zu bewegen oder davon weg zu bewegen, im vorliegenden Fall also anzuheben oder nach unten zu drücken. Ein im Oberteil 8 vorhandener Hohlraum 13 kommuniziert über in der Zwischenwand 14 angeordnete Öffnungen 15 mit der Kammer 16.

Die Kühlstation 3 besteht im Wesentlichen aus einer Kühlplatte 21 und einem bezüglich dieser durch Hubantriebe 22 bewegbaren Oberteil 28, der wie der Oberteil 8 der Laminierstation 2 ebenfalls eine Membrane 29 trägt. Die Heizplatte 5 sowie die Kühlplatte 21 können dabei auch als so genannte Temperierelemente 25 bezeichnet werden.

Die Fördermittel 6 sind in diesem Beispiel durch bevorzugt rechteckige Abschnitte 7 eines flachen, flexiblen Materials gebildet, die sowohl an dem in Förderrichtung 31 vorderen Rand als auch an dem in Transportrichtung hinteren Rand durch Haltemittel 23 aneinander gehalten sind. Die Haltemittel 23 zweier benachbarter Abschnitte 7 des Fördermittels 6 sind durch Federn 24 miteinander verbunden, so dass das Fördermittel 6 eine endlose, über Umlenkwalzen 18 gerührte Schleife bildet, deren rücklaufender Trum unterhalb der Kühlplatte 21 und der Heizplatte 5 hindurch geführt wird.

Auf jedes Element 4 bzw. eine Gruppe von Elementen 4 kann an einer Einlaufseite 30 in die Maschine 1 eine Trennfolie 10 ohne Spannung aufgelegt werden, einerseits um die Membrane 9 vor Verschmutzungen, beispielsweise durch aus den Elementen 4 austretenden Klebstoff, zu schützen, andererseits um insbesondere beim Öffnen der Laminierstation 2 jegliche Kräfte zu vermeiden, die zu einer Relativbewegung zwischen den einzelnen Schichten der Elemente 4 führen könnten.

Die Trennfolie 10 kann durch mehrere hintereinander angeordnete Abschnitte 11 oder aber auch durchlaufend ausgebildet sein. So kann die Trennfolie 10 an ihrem in Förderrichtung 31 vorab laufenden, rechtwinklig zur Förderrichtung ausgerichteten Rand durch Haltemittel 32 gehalten sein, die im hier beschriebenen Ausführungsbeispiel als Profil ausgebildet sind. Das Haltemittel 32 kann auf beiden Seiten des Förderwegs durch einen Zugmittelantrieb, beispielsweise einen nicht näher dargestellten Kettenförderer, entlang des Förderwegs bewegt werden. Die übrigen Ränder der Abschnitte 11 der Trennfolie 10 sind frei, so dass jeder Abschnitt beim Transport durch die Maschine 1 lose auf den Elementen 4 aufliegt. Besonders vorteilhaft ist dies auf dem Wegabschnitt von der Laminierstation 2 zur Kühlstation 3, weil dort die Elemente 4 noch heiß sind und daher der die einzelnen Schichten verbindende Kleber noch nicht ausgehärtet und daher klebrig ist und zum Fliessen neigt. Würde die Trennfolie 10 auf diesem Wegabschnitt gespannt sein, könnte dies zu einer unerwünschten Relativbewegung zwischen den Schichten führen. Zudem hat die hier geschilderte Konstruktion den Vorteil, dass bei jedem Abschnitt der Trennfolie 10 auf einer Seite auf Haltemittel verzichtet werden kann und so die die Abschnitte verbindenden Federn ganz eingespart werden können.

Der die Haltemittel 32 bewegende Zugmittelantrieb läuft in einem Kreislauf und die Abschnitte 11 der Trennfolie 10 werden über Umlenkwalzen 17 geführt, wobei sie oberhalb der Oberteile 28 bzw. 8 der Kühlstation 3 und der Laminierstation 2 wieder zur Einlaufseite 30 der Maschine 1, links in Fig. 1, zurück transportiert werden. Oberhalb der Maschine können Führungen vorgesehen sein (nicht dargestellt), über welche freie Enden jedes Abschnitts der Trennfolie 10 geschleppt werden. Um zu verhindern, dass die Abschnitte 11 im Bereich, in dem sie im Wesentlichen in einer vertikalen Richtung zur Einlaufseite 30 zurück geführt werden, einfach herunterfallen, sind dort Führungen in der Gestalt von in Förderrichtung 31 ausgerichteten, länglichen Bürsten 20 angeordnet. Auf beiden Flächen der Trennfolie 10 angeordnete starre Führungen würden sich schlecht eignen, denn sie müssten voneinander einen solchen Abstand aufweisen, dass die Haltemittel 32 dazwischen hindurch passen würden. Je nach Steifigkeit der Trennfolie 10 könnte diese sich in diesem Abstand zwischen den Führungen hin und her falten und dadurch in unerwünschter Weise geknickt werden. Dagegen können die Bürsten auf beiden Seiten der Trennfolie 10 bis zu deren Oberfläche reichen, denn ihre Borsten geben nach, so dass die Haltemittel 32 problemlos passieren können. Der Einfachheit halber wurde hier ein in einer Schleife durchgehendes Band dargestellt.

Auf dem Wegabschnitt, auf dem die Fördermittel 6 und die Trennfolie 10 nach dem Verlassen der Kühlstation 3 zur Einlaufseite 30 der Maschine 1 zurück geführt werden, können nicht näher dargestellte Reinigungsvorrichtungen angeordnet sein, mit denen das oder die Fördermittel 6 und die Trennfolie 10 bzw. deren Abschnitte 11 von Verunreinigungen, wie Klebemittelreste oder dgl. befreit werden. Wie man in der Fig. 1 deutlich sieht, müssen die Fördermittel 6 und die Trennfolie 10 nicht gleich lang sein. Beispielsweise kann die Trennfolie 10 problemlos einen oder mehrere Abschnitte mehr aufweisen als das Transportmittel 6.

Das aus mehreren Lagen bzw. Schichten gebildete bzw. zusammengesetzte plattenförmige Element 4 wird im Bereich der Einlaufseite 30 auf das bandförmige Fördermittel 6 aufgelegt und von diesem in die Laminierstation 2 in Förderrichtung 31 transportiert. Während diesem Vorgang wird das plattenförmige Element 4 bislang durch die ständig eine hohe Temperatur aufweisende Heizplatte 5 aufgewärmt. Dies geschieht aufgrund des gewählten Vorschubes in Richtung der Längserstreckung bzw. Förderrichtung 31 gesehen in unterschiedlichem Ausmaß. Der in Förderrichtung 31 vordere Abschnitt des plattenförmigen Elements 4 ist dabei wesentlich länger der Temperierung bzw. der damit verbundenen Wärmeaufnahme ausgesetzt als das in Förderrichtung 31 nachlaufende Ende des plattenförmigen Elements 4.

Gleiches gilt aber auch für die in Kühlstation 3 angeordnete Kühlplatte 21. Auch hier erfolgt während dem Weitertransport des plattenförmigen Elements 4 von der Laminierstation 2 hin zur Kühlstation 3 eine in Förderrichtung 31 unterschiedliche Abkühlung des plattenförmiges Elements 4. Dies führt ebenfalls zum Aufbau innerer Spannungen und damit zu einem schlechten Endzustand des gesamten Elements 4.

Um dies zu vermeiden ist für den Transportvorgang des plattenförmigen Elements 4 in die Laminierstation 2 bzw. von dieser in die Kühlstation 3 eine thermische Trennung zwischen der Heizplatte 5 bzw. der Kühlplatte 21 und den plattenförmigen Elementen 4 vorzusehen. Weiters sind während dem Transportvorgang die beiden Oberteile 8, 28 der Laminier- sowie Kühlstation 2, 3 von der Heizplatte 5 bzw. Kühlplatte 21 distanziert angeordnet.

Für die thermische Trennung während dem Transportvorgang ist eine für diese Zeitspanne eine sichere und dauerhafte Distanzierung der plattenförmigen Elemente 4 von der Heizplatte 5 bzw. Kühlplatte 21 zumeist ausreichend, ohne dass dabei auch noch eigene und zusätzlich abschirmende Zwischenlagen notwendig sind. Bei Luft handelt es sich um ein Isoliermittel, welches in fast allen Fällen ausreicht, um einen Temperiervorgang (Wärmeaufnahme, Wärmeabfuhr) während dem Transportvorgang zum überwiegenden Teil bzw. vollständig zu verhindern.

Zu diesem Zweck sind Distanzelemente 33 vorgesehen, welche in vertikaler Richtung bezüglich der Heizplatte 5 bzw. Kühlplatte 21 verstellbar sind. Mit diesen ist ein An- bzw. Abheben der zu fördernden plattenförmigen Elemente 4 von der Heizplatte 5 bzw. Kühlplatte 21 während dem Transportvorgang möglich. In dieser Darstellung sind jedoch die Distanzelemente 33 in deren Ruhestellung gezeigt, bei der sowohl das Fördermittel 6 als auch die plattenförmigen Elemente 4 an der Heizplatte 5 bzw. der Kühlplatte 21 aufliegen und somit in Kontakt zur Temperierung stehen. Die detaillierte Beschreibung der Ausbildung der Distanzelemente 33 sowie deren Wirkungsweise werden in den nachfolgenden Figuren erfolgen.

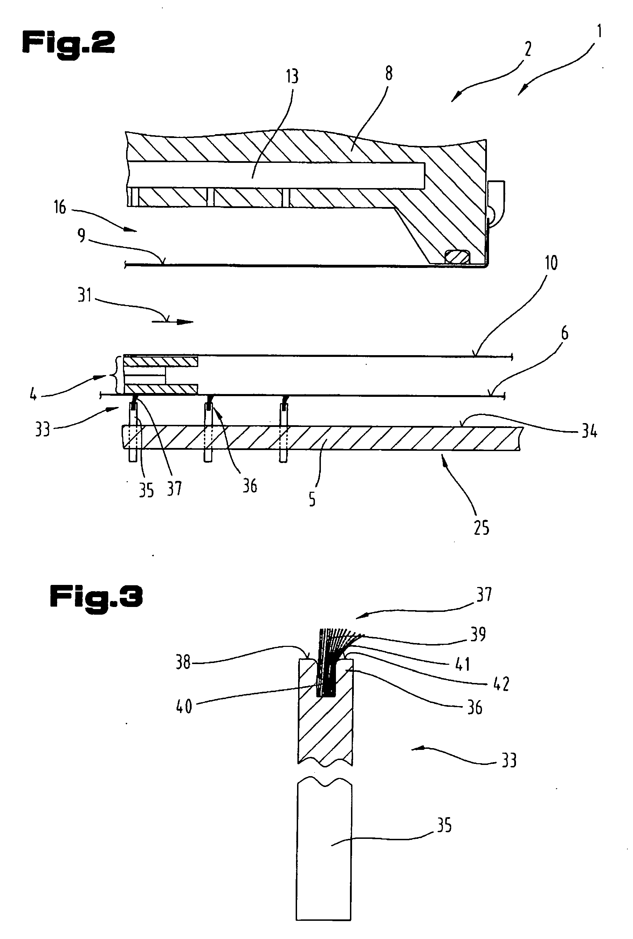

In der Fig. 2 ist ein vergrößertes Detail der Maschine 1 im Bereich von deren Laminierstation 2 gezeigt, wobei wiederum für gleiche Teile gleiche Bezugszeichen bzw. Bauteilbezeichnungen wie in der vorangegangen Fig. 1 verwendet werden. Um unnötige Wiederholungen zu vermeiden, wird auf die detaillierte Beschreibung in der vorangegangenen Fig. 1 hingewiesen bzw. Bezug genommen.

Im Gegensatz zu der Darstellung der Fig. 1 ist das plattenförmige Element 4 in einer von der Heizplatte 5 abgehobenen bzw. angehobenen Stellung dargestellt. Diese angehobene bzw. distanzierte Stellung wird hier während dem Fördervorgang des plattenförmigen Elements 4 ausgehend von der Einlaufseite 30 in die Laminierstation 2 bzw. von dieser in die unmittelbar nachfolgende Kühlstation 3 verwendet, um einen ungleichmäßigen Temperiervorgang des plattenförmigen Elements 4 zu vermeiden. Der besseren Übersichtlichkeit halber, wurde auf Stellmittel zur Betätigung des oder der Distanzelemente 33 verzichtet. Bei all den hier gezeigten Ausführungsformen durchsetzt das Distanzelement 33 die Heizplatte 5 bzw. Kühlplatte 21 und ist bezüglich dieser beiden Platten 5, 21 relativ dazu verstellbar.

Unabhängig davon wäre es aber auch möglich, das oder die Distanzelemente 33 ortsfest bezüglich der Maschine 1 bzw. deren Maschinenrahmen anzuordnen bzw. zu haltern und dazu die Heizplatte 5 und/oder Kühlplatte 21 relativ zu verlagern. Dadurch wird in beiden Fällen eine Distanzierung der plattenförmigen Elemente 4 von einer Auflagefläche 34 der Heizplatte 5 und/oder Kühlplatte 21 erzielt.

An dieser Stelle sei bemerkt, dass die Anordnung und Ausbildung der Distanzelemente 33 gemäß der Fig. 2 von der Laminierstation 2 auch auf die Kühlstation 3 übertragbar sind.

Das Distanzelement 33 umfasst ein bevorzugt stiftförmig ausgebildetes Tragelement 35, welches einen dem plattenförmigen Element 4 zuwendbaren ersten Endbereich 36 aufweist. Wie hier vereinfacht dargestellt, ist im Abschnitt des ersten Endbereiches 36 ein Stützelement 37 angeordnet, welches das Tragelement 35 in Richtung auf den Oberteil 8, 28 bzw. das abzuhebende plattenförmige Element 4 überragt.

In der zuvor beschriebenen aufliegenden Stellung des plattenförmigen Elements 4 an der Heizplatte 5 bzw. Kühlplatte 21 ist das Distanzelement 33 zumindest ebenflächig zur Auflagefläche 34 des Temperierelements 35 oder aber auch innerhalb desselben angeordnet. Dadurch wird ein Vorragen oder Überragen desselben über die Auflagefläche 34 verhindert.

Das Tragelement 35 ist zumeist aus einem festen, stabilen sowie biegesteifen Werkstoff gebildet und weist eine dem plattenförmigen Element 4 zugewendete Stirnseite 38 auf. Zur Durchführung der Vorschubbewegung der plattenförmigen Elemente 4 soll die zuvor beschriebene Distanzierung vom Temperierelement 25 so lange erfolgen, bis dass die plattenförmigen Elemente 4 für die weitere Bearbeitung auf die Heizplatte 5 und/oder Kühlplatte 21 abgesenkt und in weiterer Folge das Oberteil 8 bzw. 28 hin zur Heizplatte 5 bzw. Kühlplatte 21 verstellt werden.

Da die plattenförmigen Elemente 4 zumindest im Bereich der äußeren Lagen durch Glasplatten gebildet sind, ist eine alleinige Verwendung des Tragelements 35 zur Bildung des Distanzelementes 33 nicht vorteilhaft, da hier eine exakte gegenseitige höhenmäßige Ausrichtung bei Verwendung mehrerer Distanzelemente 33 notwendig ist, um so eine ebenflächige Abstützung des plattenförmigen Elements 4 an den Distanzelementen 33 zu erzielen. Auch ist ein Weitertransport über die stabil ausgebildeten Tragelemente 35 ungünstig und kann in weiterer Folge zu Beschädigungen an deren Oberfläche führen.

Wird zusätzlich für den Transport das zuvor beschriebene bandförmige Fördermittel 6 verwendet, kommt es aufgrund der Flächenpressung an den Auflagepunkten des plattenförmigen Elements 4 sowie gegebenenfalls auch an der Stirnseite 38 des Tragelements 35 zu starken Abnützungen und kann in weiterer Folge zu Beschädigungen derselben führen. Dies kann bis zu einem Zerreisen führen, wodurch das bandförmige Fördermittel 6 unbrauchbar wird.

Wie weiters aus der Darstellung der Fig. 2 zu ersehen ist, ist das bandförmige Fördermittel 6 in jener Stellung, bei welcher das Distanzelement 33 das Temperierelement überragt, zwischen dem Distanzelement 33 und dem plattenförmigen Element 4 verlaufend angeordnet.

In der Fig. 3 ist eine gegebenenfalls für sich eigenständige Ausführungsform des Distanzelements 33 gezeigt, wobei wiederum für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen.

Das hier gezeigte Distanzelement 33 umfasst das zumeist stiftförmig ausgebildete Tragelement 35 sowie das in seinem dem plattenförmigen Element 4 zugewendeten Endbereich 36 angeordnete Stützelement 37. Das Stützelement 37 ist bezüglich des Tragelements 35 biegeelastisch ausgebildet und kann aus einer Vielzahl von einzelnen zu einem Bündel zusammengesetzten Fäden 39 oder Litzen gebildet sein. Dabei kann auch von einer borstenförmigen Ausbildung des Stützelements 37 gesprochen werden. Wesentlich dabei ist, dass das Stützelement 37 eine elastisch federnde Abstützung bzw. Lagerung des plattenförmigen Elements 4 bewirkt, ohne dass dieses direkt auf der Stirnseite 38 des Tragelements 35 zur Auflage kommt. Bei der Ausbildung des Stützelements 37 aus einem Bündel von Fäden 39 werden diese bei Belastung elastisch umgeformt und nehmen dabei die abzutragende Last auf. Diese Stellung ist in der Fig. 3 vereinfacht angedeutet. Nach erfolgter Entlastung nimmt das Stützelement 37 wiederum eine überwiegend in Längsrichtung des Tragelements 35 ausgerichtete Stellung ein.

Zur einfacheren Anordnung und Halterung des Stützelements 37 ist in der Stirnseite 38 des Tragelements 35 eine Ausnehmung 40 angeordnet. Diese Ausnehmung 40 ist als Aufnahmeöffnung ausgebildet und haltert das aus zumeist einem Bündel von Fäden 39 zusammengesetzte Stützelement 37. Zusätzlich kann eine Verklebung mit dem Tragelement 35 möglich sein, um so nicht nur das Bündel zu bilden sondern auch eine entsprechende sichere Halterung zu gewährleisten.

Um einen geschmeidiger verlaufenden Übergang von der Ausnehmung 40 hin zur Stirnseite 38 des Tragelements 35 zu gewährleisten, ist es vorteilhaft, wenn in diesem Übergangsbereich eine Abrundung 41 hin zu einer Stirnfläche 42 des Tragelements 35 vorgesehen ist. Bevorzugt wird die Abrundung 41 über den Umfang der Ausnehmung 40 durchlaufend ausgebildet. Dadurch wird zusätzlich eine Beschädigung der einzelnen Fäden 39 des Stützelements 37 in diesem Übergangs- bzw. Stützbereich vermieden.

Das Stützelement 37 kann seinerseits aus der Gruppe der Werkstoffe von Metall, Karbon, Keramik oder Kunststoff, wie beispielsweise PEEK (Polyetheretherketon), Aramid, usw. gewählt sein. Wird der Werkstoff PEEK verwendet, zeichnet sich dieser durch eine hohe Gebrauchsfestigkeit und eine hohe Dauerlasttemperatur bis zu 250 °C bei ausgezeichneten Biege- und Zugfestigkeiten aus. Gleichfalls weist dieser eine hohe Zähigkeit und eine sehr gute Ermüdungsfestigkeit auf. Dadurch wird ein hohes Rückstellvermögen des Stützelements 37 nach der Entlastung erreicht und so über lange Zeitdauer eine sichere Abstützung der plattenförmigen Elemente 4 gegebenenfalls unter Zwischenschaltung des bandförmigen Fördermittels 6 erzielt.

Die Ausführungsbeispiele zeigen mögliche Ausführungsvarianten des Distanzelements 33 sowie einem mit diesen ausgerüstete Maschine 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus der Maschine 1 diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1, 2; 3 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

| | | | |
|---|---|---|---|
| 1 | Maschine | 36 | Endbereich |
| 2 | Laminierstation | 37 | Stützelement |
| 3 | Kühlstation | 38 | Stirnseite |
| 4 | plattenförmiges Element | 39 | Faden |
| 5 | Heizplatte | 40 | Ausnehmung |
| 6 | Fördermittel | 41 | Abrundung |
| 7 | Abschnitt | 42 | Stirnfläche |
| 8 | Oberteil | | |
| 9 | Membrane | | |
| 10 | Trennfolie | | |
| 11 | Abschnitt | | |
| 12 | Hubantrieb | | |
| 13 | Hohlraum | | |
| 14 | Zwischenwand | | |
| 15 | Öffnung | | |
| 16 | Kammer | | |
| 17 | Umlenkwalze | | |
| 18 | Umlenkwalze | | |
| 19 | | | |
| 20 | Bürste | | |
| 21 | Kühlplatte | | |
| 22 | Hubantrieb | | |
| 23 | Haltemittel | | |
| 24 | Feder | | |
| 25 | Temperierelement | | |
| 26 | | | |
| 27 | | | |
| 28 | Oberteil | | |
| 29 | Membrane | | |
| 30 | Einlaufseite | | |
| 31 | Förderrichtung | | |
| 32 | Haltemittel | | |
| 33 | Distanzelement | | |
| 34 | Auflagefläche | | |
| 35 | Tragelement | | |

## Patentansprüche

1. Distanzelement (33) zur bedarfsweisen Distanzierung von plattenförmigen Elementen (4), wie photovoltaischen Elementen, von einem Temperierelement (25), wie einer Heizplatte (5) oder Kühlplatte (21), mit einem Tragelement (35), welches einen dem plattenförmigen Element (4) zuwendbaren ersten Endbereich (36) aufweist, **dadurch gekennzeichnet, dass** im Abschnitt des ersten Endbereiches (36) ein biegeelastisch ausgebildetes Stützelement (37) angeordnet ist, welches das Tragelement (35) überragt.

2. Distanzelement (33) nach Anspruch 1, **dadurch gekennzeichnet, dass** das Stützelement (37) borstenförmig ausgebildet ist.

3. Distanzelement (33) nach Anspruch 1 oder 2**, dadurch gekennzeichnet, dass** das Stützelement (37) aus einer Vielzahl von einzelnen und zu einem Bündel zusammengesetzten Fäden (39) oder Litzen gebildet ist.

4. Distanzelement (33) nach einem der vorhergehenden Ansprüche, **dadurch gekennzeichnet, dass** das Stützelement (37) in eine in einer Stirnseite (38) des Tragelements (35) ausgebildete Ausnehmung (40) eingesetzt ist.

5. Distanzelement (33) nach Anspruch 4, **dadurch gekennzeichnet, dass** die Ausnehmung (40) mit einer Abrundung (41) in eine Stirnfläche (38) des Tragelements (35) übergeht.

6. Distanzelement (33) nach einem der Ansprüche 1 bis 4, **dadurch gekennzeichnet, dass** das Stützelement (37) aus der Gruppe der Werkstoffe von Metall, Karbon, Keramik oder Kunststoff, wie PEEK (Polyetheretherketon), Aramid, gewählt ist.

7. Distanzelement (33) nach Anspruch 1, **dadurch gekennzeichnet, dass** das Tragelement (35) stiftförmig ausgebildet ist.

8. Maschine (1) zur Herstellung von plattenförmigen Elementen (4), wie photovoltaische Elemente, mit einem Temperierelement (25), wie eine Heizplatte (5) oder Kühlplatte (21) und mit Distanzelementen (33) zur bedarfsweisen Distanzierung des plattenförmigen Elements (4) vom Temperierelement (25), **dadurch gekennzeichnet, dass** die Distanzelemente (33) nach einem der Ansprüche 1 bis 7 ausgebildet sind.

9. Maschine (1) nach Anspruch 8, **dadurch gekennzeichnet, dass** die Distanzelemente (33) zwischen einer ersten Position, in der ihr erster Endbereich (36) eine Auflagefläche (34) des Temperierelements (25) überragt und einer zweiten Position, in der die Distanzelemente (33) zumindest ebenflächig zur Auflagefläche (34) oder innerhalb des Temperierelements (25) angeordnet sind bewegbar sind.

10. Maschine (1) nach einem der Ansprüche 8 bis 9, **dadurch gekennzeichnet, dass** diese Fördermittel (6) zum Transportieren der Elemente (4) längs eines über das Temperierelement (25) führenden Förderwegs umfasst.

11. Maschine (1) nach Anspruch 10, **dadurch gekennzeichnet, dass** die Fördermittel (6) als Band ausgebildet sind.

12. Verfahren zum Betrieb einer Maschine nach den Ansprüchen 9 und 11, **dadurch gekennzeichnet, dass** die Distanzelemente (33) in ihre erste Position gebracht werden, bevor die Fördermittel (6) in Betrieb gesetzt werden, um plattenförmige Elemente (4) über das Temperierelement (25) zu bringen.
